# EUROPEAN PATENT SPECIFICATION

(11) **EP 1 016 192 B1**
(45) Date of publication and mention of the grant of the patent: **04.02.2004**
(21) Application number: 97925372.1
(22) Date of filing: 27.05.1997
(51) Int. Cl.: H02K 3/48, H02K 3/40, H02K 15/08

(54) **ROTATING ELECTRICAL MACHINE COMPRISING HIGH-VOLTAGE STATOR WINDING AND ELONGATED SUPPORT DEVICES SUPPORTING THE WINDING AND METHOD FOR MANUFACTURING SUCH MACHINE**
ROTIERENDE ELEKTRISCHE MASCHINE MIT HOCHSPANNUNGSWICKLUNG UND LÄNGLICHE HALTEVORRICHTUNGEN ZUR HALTERUNG DER WICKLUNG UND VERFAHREN ZUR HERSTELLUNG EINER SOLCHEN MASCHINE
GENERATEUR ELECTRIQUE ROTATIF COMPRENANT UN ENROULEMENT DE STATOR HAUTE TENSION ET DES DISPOSITIFS DE SUPPORT ALLONGES SOUTENANT L'ENROULEMENT ET PROCEDE DE FABRICATION DE CE GENERATEUR

(30) Priority: 29.05.1996 SE 9602079; 29.05.1996 SE 9602085; 04.11.1996 SE 9604031; 03.02.1997 SE 9700362
(43) Date of publication of application: 05.07.2000
(73) Proprietor: ABB AB, 721 83 Västeras (SE)
(72) Inventor: LEIJON, Mats, S-723 35 Västeras (SE); TEMPLIN, Peter, S-731 40 Köping (SE); RYDHOLM, Bengt, S-722 23 Västeras (SE); GERTMAR, Lars, S-722 26 Västeras (SE); LARSSON, Bertil, S-724 76 Västeras (SE); ROTHMAN, Bengt, S-723 36 Västeras (SE); CARSTENSEN, Peter, S-141 42 Huddinge (SE); JOHANSSON, Leif, S-441 31 Alingsas (SE); IVARSON, Claes, S-725 91 Västeras (SE); HERNNÄS, Bo, S-723 41 Västeras (SE); HOLMSTRÖM, Göran, S-191 63 Sollentuna (SE); GÖRAN, Bengt, S-723 55 Västeras (SE); BACKLUND, Alberti, S-734 37 Hallstahammar (SE)
(74) Representative: Karlsson, Leif Karl Gunnar
(86) International application number: PCT/SE1997/000897
(87) International publication number: WO 1997/045935

(56) References cited:
- EP-A1- 0 571 155
- DE-A- 4 233 558
- FR-A- 2 556 146
- GB-A- 1 135 242
- SE-B- 341 428
- SU-A- 955 369
- US-A- 2 846 599
- US-A- 3 158 770
- US-A- 3 932 779
- US-A- 4 429 244
- US-A- 5 036 165
- US-A- 5 325 008

## Description

The present invention relates in a first aspect to a rotating electric machine of the type described in the preamble to claim 1 or claim 41, e.g. synchronous machines, normal synchronous machines as well as dual-fed machines, applications in asynchronous static current converter cascades, outerpole machines and synchronous flow machines.

A second aspect of the invention relates to a method of the type described in the preamble to claim 43.

In the present application the terms radial, axial and peripheral constitute indications of direction defined in relation to the stator of the machine unless expressly stated otherwise. The term cable lead-through refers in the application to each individual length of the cable extending through a slot.

The machine is intended primarily as a generator in a power station for generating electric power. The machine is intended for use with high voltages. High voltages shall be understood here to mean electric voltages in excess of 10 kV. A typical operating range for the machine according to the invention may be 36 to 800 kV.

Similar machines have conventionally been designed for voltages in the range 6-30 kV and 30 kV has normally been considered to be an upper limit. This generally implies that a generator is to be connected to the power network via a transformer which steps up the voltage to the level of the power network, i.e. in the range of approximately 100-400 kV.

By using high-voltage insulated electric conductors, in the following termed cables, with solid insulation similar to that used in cables for transmitting electric power in the stator winding (e.g. PEX cables) the voltage of the machine may be increased to such levels that it be connected directly to the power network without an intermediate transformer. PEX = Cross-linked polyethylene (XLPE).

This concept generally implies that the slots in which the cables are placed in the stator to be deeper than conventional technology (thicker insulation due to higher voltage and more turns in the winding) requires. This entails new problems with regard to cooling, vibrations and natural frequencies in the region of the coil end, teeth and winding.

Securing the cable in the slot is also a problem - the cable is to be inserted into the slot without its outer layer being damaged. The cable is subjected to currents having a frequency of 100 Hz which cause a tendency to vibration and, besides manufacturing tolerances with regard to the outer diameter, its dimensions will also vary with variations in temperature (i.e. load variations).

Although the predominant technology when supplying current to a high-voltage network for transmission, subtransmission and distribution, involves inserting a transformer between the generator and the power network as mentioned in the introduction, it is known that attempts are being made to eliminate the transformer by generating the voltage directly at the level of the network. Such a generator is described in US-4 429 244, US-4 164 672 and US-3 743 867.

The manufacture of coils for rotating machines is considered possible with good results up to a voltage range of 10-20 kV.

Attempts at developing a generator for voltages higher than this have been in progress for some time, as is evident from "Electrical World", October 15 1932, pages 524-525, for instance. This describes how a generator designed by Parson 1929 was constructed for 33 kV. A generator in Langerbrugge, Belgium, is also described which produced a voltage of 36 kV. Although the article also speculates on the possibility of increasing the voltage levels, development of the concepts upon which these generators were based ceased. This was primarily due to deficiencies in the insulating system where several layers of varnish-impregnated mica foil and paper were used.

Certain attempts at lateral thinking in the design of synchronous generators are described in an article entitled "Water-and-oil-cooled Turbogenerator TVM-300" in J. Elektrotechnika, No. 1 1970, pages 6-8 of US 4,429,244 " Stator of generator" and in Russian patent specification CCCP Patent 955369.

The water-and-oil-cooled synchronous machine described in J. Elektrotechnika is intended for voltages up to 20 kV. The article describes a new insulation system consisting of oil/paper insulation whereby it is possible to immerse the stator completely in oil. The oil can then be used as coolant and simultaneosly insulation. A dielectric oil-separating ring is provided at the internal surface of the core to prevent oil in the stator from leaking out towards the rotor. The stator winding is manufactured from conductors having oval, hollow shape, provided with oil and paper insulation. The coil sides with the insulation are retained in the slots with rectangular cross section by means of wedges. Oil is used as coolant both in the hollow conductors and in cavities in the stator walls. However, such cooling systems necessitate a large number of connections for both oil and electricity at the coil ends. The thick insulation also results in increased radius of curvature, of the conductors which in turn causes increased size atof the coil overhang.

The above-mentioned US patent relates to the stator part of a synchronous machine comprising a magnetic core of laminated plate with trapezoid slots for the stator winding. The slots are stepped since the need for insulation of the stator winding decreases less in towards the rotor where the part of the winding located closest to the neutral point is situated. The stator part also includes dielectric oil-separating cylinders nearest the inner surface of the core. This part will increase the excitation requirement in comparison with a machine lacking this ring. The stator winding is manufactured from oil-saturated cables having the same diameter for each layer of the coil. The layers are separated from each other by means of spacers in the slots and secured with wedges. Characteristic of the winding is that it consists of two "half-windings" connected in series. One of the two half-windings is situated centrally inside an insulating sheath. The conductors of the stator winding are cooled by surrounding oil. A drawback with so much oil in the system is the risk of leakage and the extensive cleaning-up process required in the event of a fault condition. The parts of the insulating sheath located outside the slots have a cylindrical part and a conical screening electrode whose task it is to control the electrical field strength in the area where the cable leaves the plate.

It is evident from CCCP 955369 that in another attempt at increasing-the rated voltage of a synchronous machine, the oil-cooled stator winding consists of a conductor with insulation for medium-high voltage, having the same dimension for all layers. The conductor is placed in stator slots in the shape of circular, radially situated openings corresponding to the cross-sectional area of the conductor and space required for fixation and cooling. The various radially located layers of the winding are surrounded and fixed in insulating tubes. Insulating spacer elements fix the tubes in the stator slot. In view of the oil cooling. an inner dielectric ring is also required here to seal the oil coolant from the inner air gap. The construction illustrated has no stepping of the insulation or of the stator slots. The construction shows an extremely narrow, radial waist between the various stator slots, entailing a large slot leakage flow which greatly affects the excitation requirements of the machine.

A report from the Electric Power Research Institute, EPRI, EL-3391, from April 1984 an exposition is given of the generator concept in which a to higher voltage is achieved in an electric generator with the object of being able to connect such a generator to a power network without intermediate transformers. The report deems such a solution to offer satisfactory gains in efficiency and financial advantages. The main reason that in 1984 it was considered possible to start developing generators for direct connection to the power network was that by that time a superconducting rotor had been developed. The considerable excitation capacity of the superconducting field makes it possible to use air-gap windings with sufficient thickness to withstand the electric stresses.
By combining the construction of an excitation circuit, the most promising concept of the project, together with winding, a so-called "monolithe cylinder armature", a concept in which two cylinders of conductors are enclosed in three cylinders of insulation and the whole structure is attached to an iron core without teeth, it was deemed that a rotating electric machine for high voltage could be directly connected to a power network. This solution implied that the main insulation had to be made sufficiently thick to withstand network-to-network and network-to-earth potentials. Besides it requiring a superconducting rotor, an obvious drawback with the proposed solution is that it requires a very thick insulation, thus increasing the size of the machine. The coil ends must be insulated and cooled with oil or freones in order to direct the large electric fields in the ends. The whole machine is to be hermetically enclosed to prevent the liquid dielectric medium from absorbing moisture from the atmosphere.

It is also known, e.g. through FR 2 556 146, GB 1 135 242 and US 3 392 779, to apply various types of support members for the windings in the slots of a rotating electric machine. These do not apply to machines having an insulation system designed specifically for high voltages, and therefore lack relevance for the present invention.

US-A-5,036,165 discloses a cable having an insulation system comprising two semi-conducting layers and solid insulation between the layers. However, the use of such a cable in a rotating electric machine is not disclosed.

US-A-3,158,770 discloses a rotating electric machine having support members supporting the stator winding in the stator slots. However, the winding is of conventional type.

GB-A-1,135,242 discloses a rotating electric machine having packing means for supporting the winding in the stator slots. The packing means is inflatable with a pressurised fluid medium and excert pressure resiliently against the winding and extend axially along each conductor of the winding. The winding is of conventional type.

The present invention is related to the above-mentioned problems associated with avoiding damage to the surface of the cable caused by wear against the surface, resulting from vibration during operation.

The slot through which the cable is inserted is relatively uneven or rough since in practice it is extremely difficult to control the position of the plates sufficiently exactly to obtain a perfectly uniform surface. The rough surface has sharp edges which may shave off parts of the semiconductor layer surrounding the cable. This leads to corona and break-through at operating voltage.

When the cable is placed in the slot and adequately clamped there is no risk of damage during operation. Adequate clamping implies that forces exerted (primarily radially acting current forces with double mains frequency) do not cause vibrations that cause wear on the semiconductor surface. The outer semiconductor is to thus be protected against mechanical damage even during operation.

During operation the cable is also subjected to thermal loading so that the cross-linked polyethylene material expands. The diameter of a 145 kV cross-linked polyethylene cable, for instance, increases by about 1.5 mm at an increase in temperature from 20 to 70°C. Space must therefore be allowed for this thermal expansion.

It is already known to arrange a tube filled with cured epoxy compound between the bundle of cables in a slot and a wedge arranged at the opening of the slot in order to compress the cables in radial direction out towards the bottom of the slot. The abutment of the cables against each other thus also provides certain fixation in lateral direction. However, such a solution is not possible when the cables are arranged separated from each other in the slot. Furthermore the positioning force in lateral direction is relatively limited and no adjustment to variadons in diameter is achieved. This construction cannot therefore be used for high-voltage cables of the type under consideration for the machine according to the present invention.

Against this background the object of the present invention is to solve the problems of achieving a machine of the type under consideration so that the cable is not subjected to mechanical damage during operation as a result of vibrations, and which permits thermal expansion of the cable. Achieving this would enable the use of cables that do not have a mechanically protecting outer layer. In such a case the outer layer of the cable consists of a thin semiconductor material which is sensitive to mechanical damage.

According to a first aspect of the invention this has been solved by giving a machine of the type described in the preamble to claim 1 or claim 41 the special features defined in the characterizing part of respective claims.

The invention is in the first place intended for use with a high-voltage cable composed of an inner core having a plurality of strand parts, an inner semi-conducting layer, an insulating layer situated outside this and an outer semi-conducting layer situated outside the latter, particularly in the order of magnitude of 20 -200 mm in diameter and 40-3000 mm² in conducting area.

The application on such cables thus constitutes preferred embodiments of the invention.

The elongate pressure members running parallel with the cable lead-throughs secure the latter in the slots and their elasticity permits a certain degree of fluctuation in the diameter of the cable to be absorbed. An important prerequisite is hereby created for achieving a machine with high-voltage cables in the windings at a voltage level that permits direct connection to the power network without any intermediate transformer.

According to a particularly advantageous embodiment of the invention at least one of the two semi-conducting layers has the same coefficient of thermal expansion as the solid insulation so that defects. cracks and the like are avoided upon thermal movement in the winding.

According to a preferred embodiment of the invention the support members comprise elongate pressure members.

The elongate pressure members running parallel with the cable parts secure the latter in the slots and the resilient members allow for the absorption of a certain degree of fluctuation in the diameter of the cable. An important prerequisite is hereby created for achieving a machine with high-voltage cables in the windings at a voltage level that permits direct connection to the power supply system without any intermediate transformer.

In an advantageous embodiment of the invention the pressure elements comprise a tube filled with a pressure-hardened material, preferably epoxy. An expedient and reliable type of pressure element is hereby obtained, which is simple to apply.

According to a preferred embodiment each pressure element is arranged to act simultaneously against two cable lead-throughs so that the number of pressure elements may be limited to approximately half the number of cable lead-throughs in each slot. The pressure elements are preferably arranged in waist parts of the slot, situated between a pair of cable lead-throughs, thus facilitating the use of a single pressure element for two cable lead-throughs. In this case it is advantageous to design the waist part with a constriction on only one side so as to leave space for the pressure element on the opposite side.

According to a preferred embodiment the pressure members are arranged on the same side of the slot as the resilient members, which produces a simple embodiment. It is also advantageous for the pressure members and resilient members to be joined together, suitably as a pressure hose with resilient pads applied on its outer surface.

According to yet another preferred embodiment the support member consists of a corrugated sheath surrounding the cable.

Since the cable is surrounded by a corrugated sheath it will be firmly fixed in the stator slots, the tops of the corrugations abutting and supported by the slot walls. The vibrations are suppressed by means of clamping at the same time as the outer semi-conductor layer of the cable is protected from damaging contact with the laminations in the slot walls. The corrugations also allow space for thermal expansion of the cable.

In a preferred embodiment of the invention the corrugated sheath is in the form of a separate tubular corrugated sheath applied around the outer semiconductor layer of the cable. The tube may be made of insulating or electrically conducting plastic. The sheath thus constitutes a protection that screens the semiconductor layer from direct contact with the slot walls, thereby protecting it. The sheath is thus in contact with the depressions of the corrugations towards the semi-conductor layer and the cable can expand in the undulating spaces formed between sheath and semi-conductor layer.

In this preferred embodiment it is also advantageous to arrange the corrugations annularly or as a helix. It is also advantageous in this embodiment to arrange a casting compound between sheath and slot walls. The position of the sheath is thus fixed more securely, avoiding any risk of it being displaced. Favourable heat transfer is also obtained from the cable to surrounding parts and any cooling arrangements provided. These may advantageously be embedded in the casting compound as longitudinally running tubes.

In a preferred alternative embodiment of the invention the corrugated sheath surface is in the form of corrugations directly in the outer semiconductor layer of the cable. The semiconductor layer will then admittedly come into direct contact with the slot walls, but only at the tops of the corrugations. Since the outer semiconductor layer is limited on its inner side by a cylindrical surface, its thickness at the tops of the corrugations will be considerable so that any damage to the tops of the corrugations on the semiconductor layer as a result of scratching or wear from the slot walls will not cause significant damage to the semiconductor layer.

In this alternative embodiment the corrugations preferably run in the longitudinal direction of the cable.

In another advantageous embodiment the pressure elements consist of a hose. An expedient and reliable type of support element is thus formed. which is also simple to apply.

According to a preferred variant of this embodiment, the hose is filled with a pressure fluid. This enables the elasticity and contact pressure to be easily adjusted to that required. The hose may either be closed, which has the advantage that no special means is required to maintain the pressure. or the pressure medium in the hose may communicate with a pressure source, enabling the pressure to be regulated and reduced if necessary.

In another preferred embodiment the hose encloses a pressure medium in solid form, e.g. silicon rubber, an alternative that provides ease of manufacture, little risk of faults occurring and requires little maintenance. In this case, the pressure medium should preferably have a cavity running axially through it.

According to a preferred embodiment each support element is arranged to act simultaneously against two cable parts so that the number of support elements may be limited to approximately half the number of cable lead-throughs in each slot. The support elements are preferably arranged in waist parts of the slot, situated between a pair of cable lead-throughs, thus facilitating the use of a single support element for two cable lead-throughs. In this case it is advantageous to design the waist parts with a larger constriction on only one side so as to leave space for the support element on the opposite side, which may have a shallower constriction or none at all. i.e. so that the narrow part is asymmetrical.

The above and other advantageous embodiments of the machine according to the invention are defined in the sub-claims to claim 1 and claim 41.

From a second aspect the objective has been achieved by giving a method as described in the preamble to claim 43 the special features defined in the characterizing part of this claim.

According to a preferred embodiment of the method according to the invention, pressure members can be conveniently arranged in the stator slots so that. thanks to the hose being filled with pressure medium after it is in place, an economic manufacturing process is achieved with regard to this particular component of the machine.

It is advantageous to pull the hose through several times. forwards and backwards, thereby producing several pressure elements from the same hose which is jointly filled with pressure medium.

According to another preferred embodiment the cable is surrounded by a corrugated sheath before it is inserted into the slot.

This embodiment offers considerable advantages since the risk of the laminations shaving off vital parts of the outer semiconductor layer is eliminated since only the tops of the corrugations reach the slot walls.

In a preferred embodiment of the alternative just described, a separate, tubular corrugated sheath is applied around the cable before it is inserted into the slot.

In this embodiment the sheath is preferably fitted over the cable in axial direction and a lubricant is used, thereby achieving simple application of the sheath onto the cable.

In an advantageous variant of this embodiment of the method the corrugations on the sheath are annular. When the sheath with the cable is inserted into the slot by pulling on the sheath, the annular corrugations cause the sheath to stretch in longitudinal direction at the same time as its largest diameter decreases, i.e. the tops of the corrugations move radially inwards. A clearance is thus obtained between the sheath and the slot wall which facilitates insertion. When the sheath is in place and tensile force is no longer applied, it returns to its original shape where the tops of the corrugations will be in contact with the slot wall and fix the cable firmly in place.

In an alternative embodiment of the method the corrugations run in the longitudinal direction of the cable. In a particularly preferred embodiment of this alternative the corrugations are produced directly in the outer semiconductor layer of the cable. The advantage is thus achieved that the need for a separate element is eliminated. It also means that the corrugations can be produced simply by manufacturing the cable in such a way that its outer semiconductor layer is extruded, which constitutes a preferred embodiment of this alternative.

The support element is preferably inserted axially, after the winding phase.

Since the support elements are inserted after the high-voltage cable has been wound they constitute no obstruction for passing the cable through the slot during the actual winding process, and the axial insertion can be carried out in a simple manner. several advantageous ways being feasible.

In a preferred embodiment of the method each support element is inserted in such a state that it can pass without obstruction through the cross-sectional profile formed in the available space between cable and slot wall. Once the support element is in place it is caused to expand transversely to the axial direction.

Since the support element is given its intended thicker extension only after insertion, enabling it to be inserted without obstruction, there is negligible friction during the insertion, which facilitates the process.

In a preferred variant of this invention the support element comprises an outer, thin-walled elastic hose. If it is sufficiently thin and elastic it will be so slippery that it can easily be inserted as described above. The hose can then be filled with cold-hardening silicon rubber to assume its expanded state, in which case the hose should suitably contain an elongate body upon insertion. When the hose is thereafter filled with the hardening, elastic material, the space between body and hose will be filled and less filler is required.

Another preferred variant to achieve unimpeded insertion of the support element is for it to have a smaller cross-sectional profile than the cross-sectional profile of the available space so that there is a clearance upon insertion. It may be advantageous to subject the support element to an axial tensile force upon insertion so that its cross-sectional profile is reduced. Once in place, the tensile force is released so that the support element assumes its operating shape. This offers a simple method of application. Alternatively the cross-sectional profile of the support element may be forcibly deformed so that it can be passed through the space. whereupon the deformation is released when the element is in place. This also constitutes a simple and expedient method of application.

A third preferred variant for achieving unimpeded insertion is for the support element originally to have had a cross-sectional profile in unloaded state that is less than the cross-sectional profile of the space, and is in the form of a hose which, when it has been applied, is expanded by placing the hose under pressure, suitably by means of pressurized gas or liquid or by introducing a cold-hardening compound which is allowed to solidify.

The above and other advantageous embodiments of the method according to the invention are defined in the sub-claims to claim 43.

The invention will be explained in more detail in the following description of advantageous embodiments, with reference to the accompanying drawings in which;
Figure 1 shows schematically an axial end view of a sector of the stator in a machine according to the invention,
Figure 2 shows a cross-section through a cable used in the machine according to the invention,
Figure 3 shows schematically an axial partial section through a stator slot according to a first embodiment of the invention,
Figures 4 is a section along the line III-III in Figure 3,
Figure 5 is a section corresponding to that in Figure 3, but illustrating a second embodiment of the invention,
Figure 6 shows a detail of Figure 3 prior to assembly,
Figure 7 shows in equivalent manner to Figure 6, a detail from Figure 5,
Figure 8 shows a view in perspective of a cable with sheath according to a third embodiment of the invention,
Figure 9 shows a radial partial section through a slot in a stator in the embodiment according to Figure 8,
Figure 10 is a section along the line V-V in Figure 9,
Figure 11 is a view in perspective of a cable according to a fourth embodiment of the invention,
Figure 12 is a radial partial section of a slot according to a fifth embodiment of the invention.
Figures 13 - 15 are sections corresponding to Figure 12 according to alternative embodiments of the invention,
Figure 16 is a view in perspective of a support element according to one embodiment of the invention,
Figures 17 and 18 are sections corresponding to Figure 12 illustrating additional alternative embodiments of the invention,
Figures 19 - 21 show cross-sections through the support element according to additional alternative embodiments of the invention,
Figure 22 is a section corresponding to Figure 12 illustrating yet another embodiment of the invention.

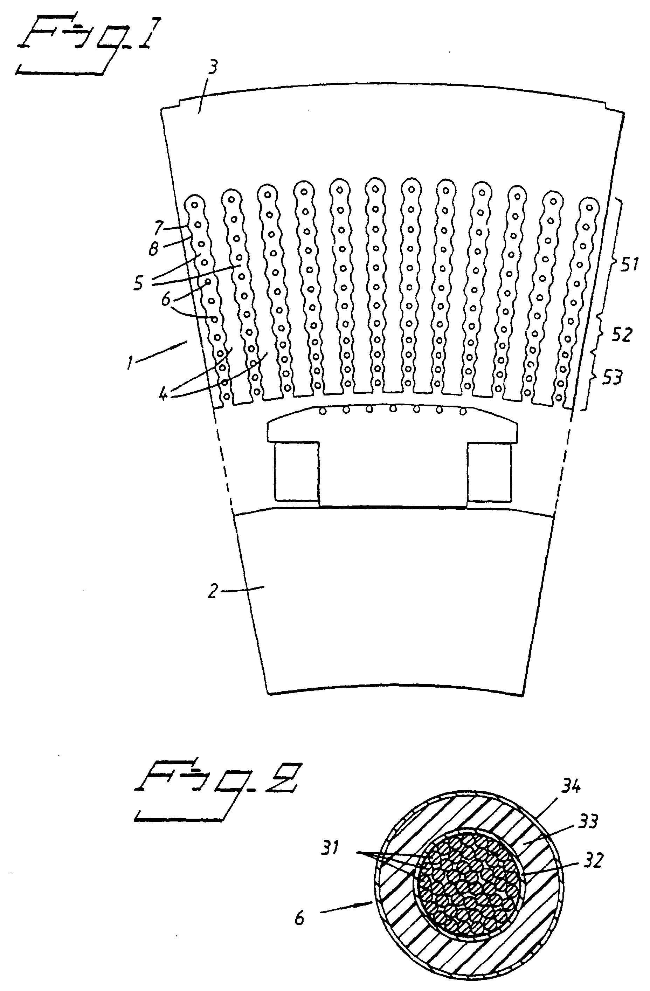

In the axial view shown schematically in Figure 1 through a sector of the stator 1 of the machine, its rotor is designated 2. The stator is composed in conventional manner of a laminated core of sheet steel. The figure shows a sector of the machine, corresponding to one pole division. From a yoke portion 3 of the core situated radially outermost, a number of teeth 4 extend radially in towards the rotor 2 and are separated by slots 5 in which the stator winding is arranged. The cables 6 in the windings are high-voltage cables which may be of substantially the same type as high-voltage cables used for power distribution, so-called PEX cables. One difference is that the outer mechanically protective sheath that normally surrounds such a cable has been eliminated. The cable thus comprises only the conductor, an inner semiconductor layer, an insulating layer and an outer semiconducting layer. The semiconductor layer, sensitive to mechanical damage, is thus exposed on the surface of the cable.

In the drawings the cables 6 are illustrated schematically, only the conducting central part of the cable lead-through or coil side being drawn in. As can be seen, each slot 5 has varying cross-section with alternating wide parts 7 and narrow parts 8. The wide parts 7 are substantially circular and surround cable lead-throughs. and the waist parts between these form narrow parts 8. The waist parts serve to radially position each cable lead-through. The cross- section of the slot as a whole also becomes slightly narrower in radial direction inwards. This is because the voltage in the cable lead-throughs is lower the closer they are situated to the radially inner part of the stator. Slimmer cable lead-throughs can therefore be used here, whereas increasingly coarser cable lead-throughs are required further out. In the example illustrated cables of three different dimensions are used, arranged in three correspondingly dimensioned sections 51, 52, 53 of the slots 5.

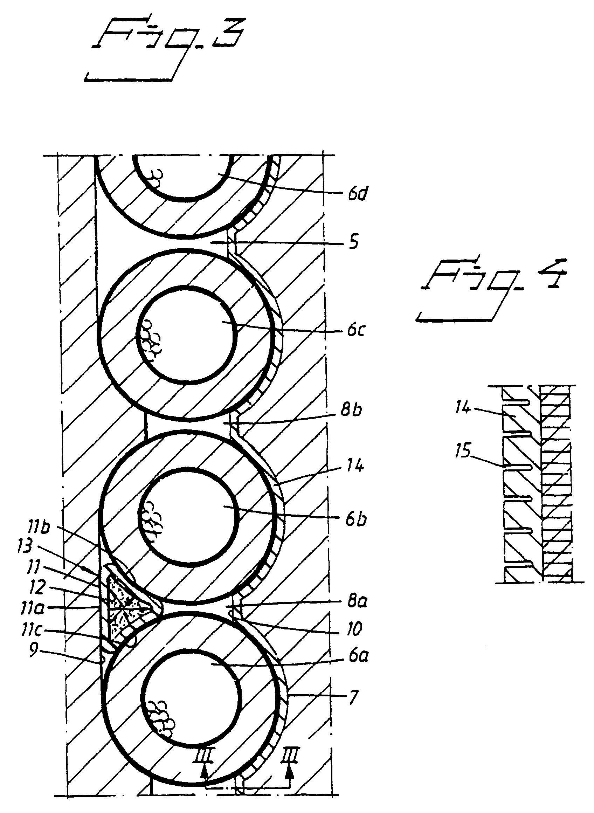

Figure 2 shows a cross-sectional view of a high-voltage cable 6 according to the present invention. The high-voltage cable 6 comprises a number of strand parts 31 made of copper (Cu), for instance, and having circular cross section. These strand parts 31 are arranged in the middle of the high-voltage cable 6. Around the strand parts 31 is a first semiconducting layer 32. Around the first semiconducting layer 32 is an insulating layer 33, e.g. cross-linked polyethylene insulation. Around the insulating layer 33 is a second semiconducting layer 34. The concept "high-voltage cable" in the present application thus need not include the metal screen and the outer protective sheath that normally surround such a cable for power distribution.

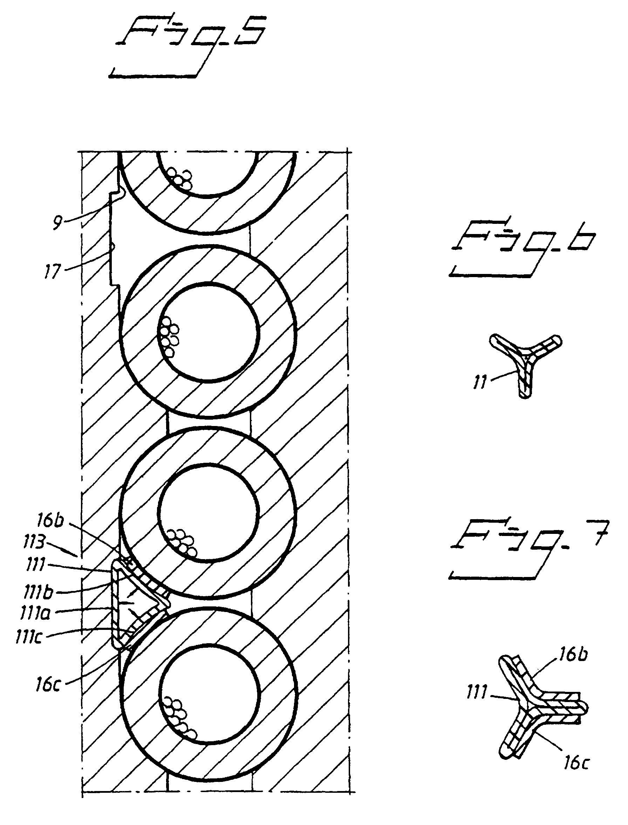

Figure 3 shows an enlarged section through a part of a stator slot 5. The slot is of substantially the type shown in Figure 1. One difference is that some of the waist parts 8, i.e. the narrower parts that separate the cable lead-throughs 6, are one-sided. Thus alternate narrower parts 8b have constrictions on both sides so that the narrow part is substantially symmetrical, and alternate narrower parts 8a have a constriction on only one side, the other side lying in the tangential plane 9 to adjacent arc-shaped wide parts. In longitudinal direction, therefore, the slot 5 will comprise parts having three different widths; the wide circular parts 7, the single-sided waist parts 8a and the even narrower double-sided waist parts 8b. As in Figure 1, the slot 5 is also composed of sections 9, 10, 11 of different widths.

The arrangement of the single-sided waist parts 8a provides extra space in the slot for pressure elements 13. The pressure element 13 illustrated in the figure consists of a hose extending axially through the slot, i e. parallel with the cable lead-throughs 6. The pressure element 13 is filled with pressure-hardened epoxy which presses the hose out towards adjacent surfaces, acquiring a shape conforming to these surfaces upon hardening. The epoxy is introduced at a pressure of approximately 1 MPa. The hose thus acquires a substantially triangular cross-section, with a first surface 11a supported by the slot wall, a second concave arc-shaped surface I 1b abutting one of the adjacent cable lead-throughs 6b and a third surface 11c having the same shape as the second but abutting another of the adjacent cable lead-throughs 6a. Arranged in this manner. the pressure element 13 simultaneously presses the two cable lead-throughs 6a and 6b against the opposite slot wall with a force on each cable lead-through 6a, 6b that is directed substantially towards its centre.

A sheet 14 of rubber or other material having equivalent elastic properties is arranged on the opposite slot wall. Each cable lead-through will thus be resiliently clamped between the pressure element 13 and the rubber sheet 14 so that it is fixed in its position but so that thermal expansion of the cable can also be accommodated. As can be seen in the enlarged section through it shown in Figure 3, the rubber sheet 14 is suitably provided with slots 15 enabling optimal adjustment of the spring constant in the sheet by a suitable selection of depth, breadth and pitch thereof.

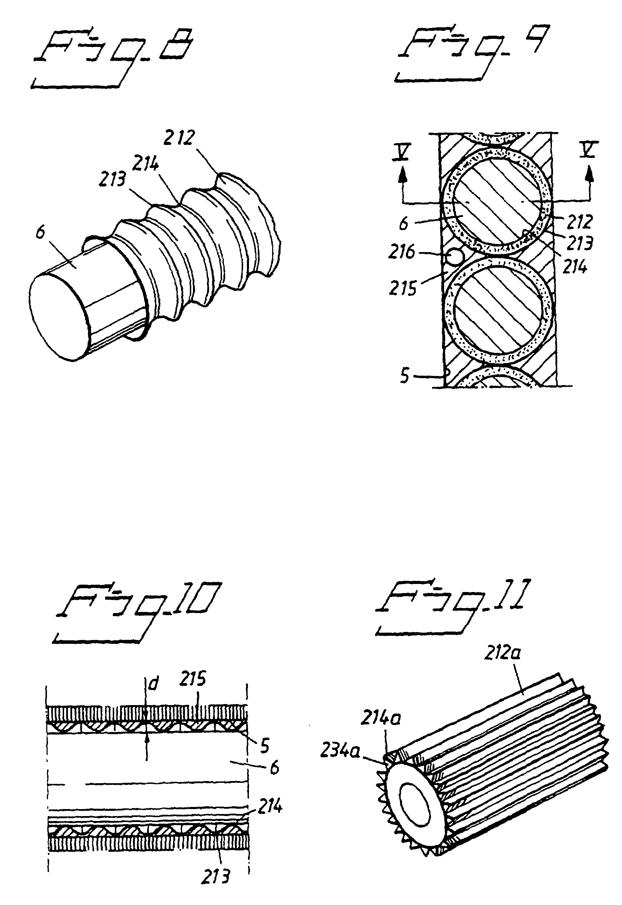

Figure 4 shows an alternative embodiment of the invention, modified from that according to Figure 2 substantially in that the rubber sheet 14 has been replaced with rubber pads 16b, 16c, arranged in the form of flat rubber strips along the surfaces 111b, 111c of the pressure element 113 facing the cable lead-throughs. These rubber pads provide the necessary elasticity in the positioning and eliminate the need for a rubber sheet on the opposite side. Another difference is that a longitudinal recess 17 is provided in axial direction in the wall of the slot 5 at the points where the pressure elements 113 are arranged. This affords more space for the pressure elements 113 and also supports them in radial direction.

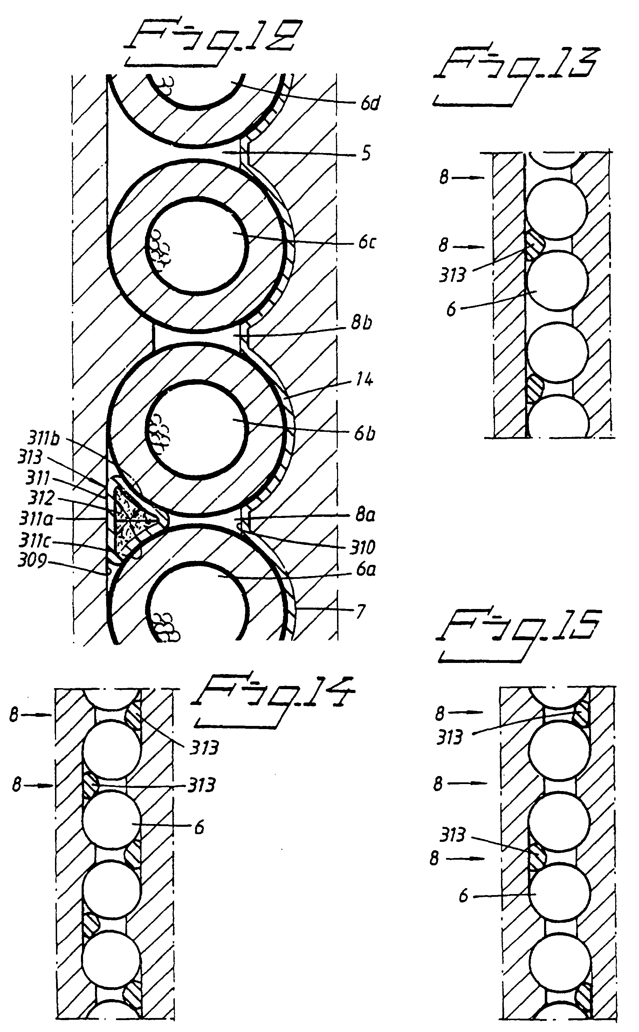

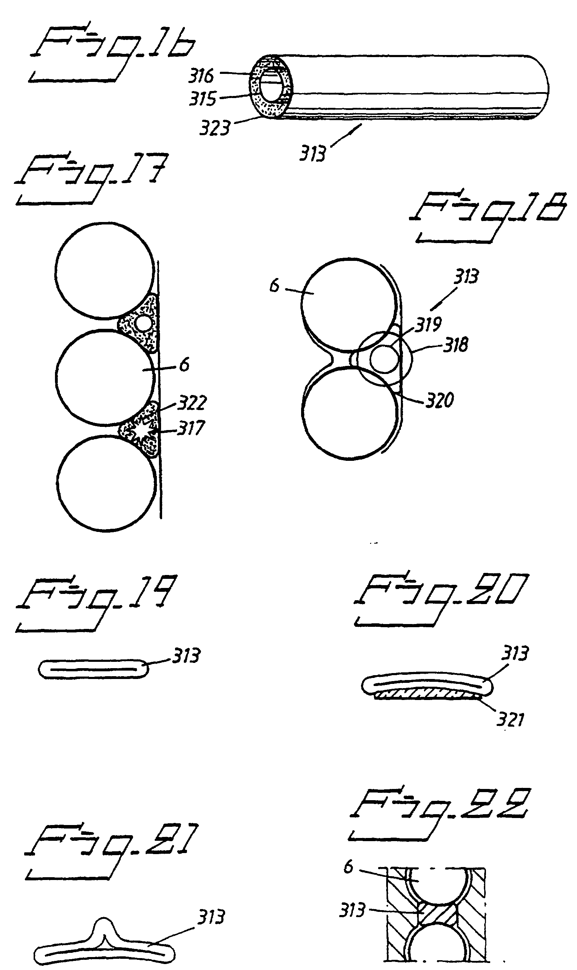

The pressure elements 13, 113 are inserted into the slots after the stator cables have been wound. The hose 11, 111 for the pressure elements 13, 113 is then inserted axially into the substantially triangular space between a pair of cable lead-throughs and the tangential wall part 9. At this stage the hose is not yet filled with epoxy and therefore has a collapsed shape as illustrated in Figures 6 and 7 for respective embodiments. It is thus easy to pull the hose through the available space. When the hose is in place it is filled with epoxy so that its cross section expands and substantially fills the triangular gap. Epoxy is introduced under sufficient pressure to press respective cable lead-throughs 6a, 6b with the desired force against the opposite wall of the slot. The pressurized epoxy is allowed to harden at this pressure to maintain a constant pressure on the cable lead-throughs.

A single hose 11, 111 can be pulled repeatedly forwards and backwards through the slot 5 so that the various pressure elements forming the pressure members of a slot are formed out of a single long hose upon application, the hose then being filled with epoxy as described above. When the epoxy has hardened properly, the arc-shaped hose parts formed outside each end plane of the stator can be cut away and removed.

The rubber sheet in the example shown need not necessarily be arranged in the part of the slot opposite to the pressure element. Instead it may be arranged on the same side. Neither need the resilient element in the embodiment according to Figure 2 be in the form of a sheet. but may in the form of a strip as in the embodiment according to Figure 4.

Instead of using a material such as epoxy which is hardened under pressure, the hose may be filled with a pressure fluid in gaseous or liquid form. In this case the tube itself acquires elastic properties and will function both as pressure element and as resilient member. The rubber sheet/strips are not needed in such an embodiment.

Figure 8 shows a perspective view of the cable 6 surrounded by a sheath 212 according to a first embodiment of the invention. The sheath 212 has annular ridges with tops 213 and annular depressions 214 between the tops.

Figure 9 shows a part of a stator slot in a radial section through the embodiment according to Figure 8. In the embodiment illustrated the slot does not have the shape of a bicycle chain as shown in Figure 1 but instead has slot walls that are substantially flat in radial direction. Each cable part 6 is surrounded by a sheath 212 of the type shown in Figure 8. The section is taken through one of the annular corrugation tops 213, i.e. when the sheath extends out to the slot wall. The annular depression 214 behind is in contact with the cable 6. The space between the cables 6 is filled with a casting compound 215. This also fills out the space between the ridges, as is symbolized by the dotted area in the figure. The sheath 212 is a plastic tube of insulated or electrically conducting plastic, and the casting compound is a suitable casting resin, epoxy. Cooling tubes 216 may be arranged in the casting compound in the triangular spaces formed between the cables. The cooling tubes may be of stainless steel or plastic, e.g. HD-PEX.

The difference between the outer and inner diameter of the corrugated sheath 212 is suited to the thermal expansion of the cable, normally about 3-4 mm. The wave depth. i.e. the distance between a depression 214 and a top 213 (d in Figure 5) is thus about 1.5-2 mm.

The cable 6 with sheath is shown in an axial section in Figure 10, the upper half of the figure illustrating the cable as it appears before the machine has been in operation so that the cable has a cylindrical sheath surface.

When the machine is in operation the thermal expansion causes the outer shape of the cable 6 to adjust to the shape of the ribbed sheath 212 since expansion occurs only in the spaces formed between the depressions 214. This is illustrated in the lower part of Figure 10 where the cable fills out the sheath and follows its contours. Since these spaces must be able to take up the entire expansion, the depth of the depressions must naturally be correspondingly greater than the increase in diameter the cable would have if it had been able to expand uniformly in longitudinal direction.

The fact that the space outside the sheath is filled out during operation assures the heat transfer from the cable to the surroundings. When the cable cools down during an interruption in operation it will to a certain extent retain its profiled outer surface.

When the stator is wound at manufacture the sheath 212 is first fitted onto the cable 6. A water-based lubricant such as a 1% polyacrylamide may be used. The cable is then passed through the slot 5 by pulling on the sheath. The corrugations cause the sheath 212 to stretch and it is thus compressed in radial direction so that its outer diameter is decreased. A clearance is thus obtained through the wall of the slot 5. thereby facilitating insertion. Once in place, when the tensile force is no longer applied, the sheath expands so that its ridges 213 lie in contact with the slot wall as shown in Figures 4 and 5.

Another method is to thread the sheath 212 into the slot 5 by pulling on the sheath. The corrugations then cause the sheath to stretch and it is thus compressed in radial direction so that its outer diameter is decreased. A clearance is thus obtained in relation to the wall of the slot 5, thereby facilitating insertion. Once in place. when the tensile force is no longer applied. the sheath expands so that its ridges 213 lie in contact with the slot wall as shown in Figures 9 and 10.

The cable is then drawn into the sheath which is positioned, possibly using a water-based lubricant such as 1% acrylamide.

The casting compound 215 is then introduced into the spaces outside the sheath and this is secured to the slot walls by the casting compound. The longitudinal cooling tubes 216 may be embedded in casting compound at the same time. The casting compound 215 transfers the heat from the cable to the surroundings and/or the cooling tubes 216. Casting the sheath in this way also ensures that it is positioned in axial direction and, thanks to its corrugated shape the cable is axially secured in the sheath. The cable is thus firmly held in the slot even if the machine is oriented with vertical axis.

Figure 11 shows an alternative arrangement of the corrugations on the cable surrounding the sheath surface. This differs from the embodiments described earlier primarily in that the corrugations are produced directly in the outer semiconducting layer 234a of the cable 6. The outer semiconductor layer consists of an ethylene copolymer with soot particles embedded in the material in a quantity dictated by the conductivity aimed at in the layer. In conventional semiconductor layers, i.e. with cylindrical outer surface, the layer is normally thicker than about 1 mm. In the embodiment shown in Figure 11, it has a thickness in the depressions that is less than the "normal" thickness and a thickness in the tops that exceeds this. With a reference thickness of 1 mm, for instance. of a circular layer, the corresponding corrugated layer has a thickness of 0.5 mm in the depressions and 1.5 mm in the tops.

The cable illustrated in Figure 11 thus lies in the slot with direct contact between the tops 14a of the corrugations and the slot wall. Since the semiconductor layer is thicker there, a certain amount of damage can be tolerated to the semiconductor layer to those parts upon insertion of the cable and as a result of vibration during operation. without injurious consequences. Furthermore, the contact between cable and tops 14a also provides a certain stabilization so that the problem of vibration is reduced.

During operation the thermal expansion of the cable will result in the cable expanding only in the free spaces between the corrugations, and these will be substantially filled by the semiconductor material. The expansion force will also cause the contact pressure at the tops to increase and the clamping action to be intensified. The material of the semiconductor layer is deformed substantially elastically at temperatures around 20°C, whereas at high temperatures from about 70°C and upwards the deformation will be increasingly plastic. When the cable cools down at an interruption in operation, therefore, its outer semiconductor layer will retain a certain deformation, thereby having less height at the corrugations.

In the embodiment according to Figures 8-10, where the corrugations are arranged on a separate sheath, they may of course be arranged longitudinally instead, and in the embodiment according to Figure 11 the corrugations may be annular instead of longitudinal.

In both cases the corrugations may have some other appearance, e.g. helical. The corrugations may also run in two dimensions. The profile of the corrugations may be sinus-shaped as in Figures 8-10 or may have sharp edges as in Figure 6, regardless of the direction they run in and regardless of whether they are arranged on a separate sheath or directly in the outer semiconductor layer.

The corrugated sheath surface may also be formed using separate elements. e.g. longitudinal rods of polyamide arranged along the cable and distributed around its periphery. These rods together with the outer semiconducting layer then form a corrugated sheath surface in which the tops are formed by the rods and the depressions by the surface of the semiconductor layer.

The embodiment with corrugated sheath surface is suitable for slots with arbitrary profile of the slot walls, radially flat walls as in Figure 9, corrugated walls as in Figure 1, or some other suitable shape.

Figure 12 shows an enlarged section through a part of a stator slot 5. The slot is of substantially the type shown in Figure 1. One difference is that some of the waist parts 8, i.e. the narrower parts that separate the cable lead-throughs 6. are one-sided. Thus alternate narrower parts 8b have constrictions on both sides so that the narrow part is substantially symmetrical, and alternate narrower parts 8a have a constriction on only one side, the other side lying in the tangential plane 9 to adjacent arc-shaped wide parts. In longitudinal direction, therefore, the slot 5 will comprise parts having three different widths; the wide circular parts 7, the single-sided waist parts 8a and the even narrower double-sided waist parts 8b. As in Figure 1. the slot 5 is also composed of sections 51, 52, 53 of different widths.

The arrangement of the single-sided waist parts 8a provides extra space in the slot for pressure elements 313. The pressure element 313 illustrated in the figure consists of a hose extending axially through the slot, i.e. parallel with the cable lead-throughs 6. The pressure element 313 is filled with pressure-hardened silicon or urethane rubber 312 which presses the hose out towards adjacent surfaces, acquiring a shape conforming to these surfaces upon hardening. The hose thus acquires a substantially triangular cross-section, with a first surface 11a supporting the slot wall, a second concave arc-shaped surface 311b abutting one of the adjacent cable lead-throughs 6b and a third surface 311c having the same shape as the second but abutting another of the adjacent cable lead-throughs 6a. Arranged in this manner. the pressure element 313 simultaneously presses the two cable lead-throughs 6a and 6b against the opposite slot wall with a force on each cable lead-through 6a, 6b that is directed substantially towards its centre.

A sheet 314 of rubber or similar material is arranged on the opposite slot wall in the example shown.

The sheet 314 is applied to absorb a part of the thermal expansion. However, the element 313 may be adapted to enable absorption of all the thermal expansion. in which case the sheet 314 is omitted.

Several different variants for the slot profile are applicable besides those illustrated in Figures 1 and 12. A few examples are illustrated in Figures 13-15, where Figure 13 shows a slot shape in which the narrow parts 8 are one-sided, i.e. one side of the slot is completely flat, whereas the other protrudes into every waist part. Support elements 313 are arranged at alternative narrow parts 8. Alternatively support elements may be arranged in every narrow part 8. All support elements 313 are situated close to the flat slot wall.

In Figure 14 every narrow part 8 is similarly one-sided, i.e. formed by a flat part of one slot wall constituting a tangent to adjacent wide parts on the other side of a protruding wall section, the flat and protruding parts being situated alternately on each side of the slot. The support elements 313 are situated at each tangent plane part of the wall.

In Figure 15 alternate narrow parts 8 are double-sided, i.e. with protruding wall sections on both sides of the slot, whereas alternate narrow parts are single-sided with one wall part constituting a tangent plane, their positions alternating between the two sides of the slot. The sealing elements 313 are situated at these tangent plane parts.

Figure 16 illustrates an embodiment of the support element 313 consisting of a thin-walled outer hose 323 and a thin-walled inner hose 315, both of rubber or some other elastic material. The hoses have such thin walls that they are easily deformed, becoming slippery and easily inserted axially into the elongated space between cable and slot wall.

When the hoses 323, 315 are in place the space between them is filled with a curable elastic rubber material, e.g. silicon rubber 316, below which the inner hose 15 is kept filled with compressed air. When the silicon rubber 316 has solidified a thin-walled hose is obtained which presses against cable and slot wall and which has a certain elasticity in order to absorb thermal expansion of the cable. The inner hose 315 may be concentric with the outer hose, but is suitably eccentrically situated. When the element 313 is expanded by being filled with silicon rubber, it will adapt to the cross-sectional shape of the available space, becoming a rounded-off triangular shape as shown in Figures 12-15. The cavity formed by the inner hose contributes to increasing the elasticity of the support element 313 which, if it were completely filled with silicon rubber, would not be sufficiently compressible. The inner hose 315 may either remain after the space has been filled and the material hardened, or it may be pulled out.

Figure 17 shows two embodiments of the support element 313 in which the upper alternative corresponds to the support element applied as described with reference to Figure 16.

The lower part of Figure 17 illustrates another embodiment in which, upon application, the inner hose is replaced with a rod-shaped filler profile 317. The support element is formed in similar manner to the embodiment according to Figure 16 but with the difference that the outer thin-walled hose is inserted enclosing the filler profile 317 instead of the inner thin-walled hose. After that the silicon rubber has been sprayed into the space between the hose and the surrounding thin-walled hose and has hardened. the filler profile 317 is pulled out of the support element so that a space of corresponding shape is formed. The filler profile 317 may have a suitable profile and be provided, for instance, with longitudinal grooves 322 in order to orientating the space optimally and achieve the desired elasticity. The filler profile 317 is suitably surface-treated to facilitate its removal.

Figure 18 illustrates yet another method of applying the support element 313 in the space between cable and slot wall. The element here comprises a round rubber rod with a diameter in unloaded state that is greater than can be inserted into the cross- section of the available space. Its unloaded shape is illustrated by the circle 318. To enable insertion of the rod, it is pulled out in longitudinal direction so that its cross-sectional area decreases to the equivalent of the circle 319. It can then be pulled through the available space. When it is in place the tensile stress is removed so that it contracts axially and expands in cross-sectional direction. It will then contact the slot wall and adjacent cable parts with a compressive force and assume the triangular cross-sectional shape designated 320.

Figures 19-21 illustrate another embodiment showing how the support element 313 may be applied. where upon insertion the support element is forced to assume such a cross-sectional shape that it may be inserted without obstruction into the available space.

In Figure 19 the support element consists of a hose which is placed under vacuum suction so that it acquires the flat shape shown in the figure, and is then sealed. When the hose is in place. air is allowed in by cutting off the ends of the hose so that it expands to abutment with cable and slot wall. The thickness of the hose is chosen so that its inherent cross-sectional rigidity when the hose is no longer vacuum-sealed, is designed to achieve sufficient pressure and permit thermal expansion of the cable.

In Figure 20 a hose similar to the one in Figure 19 is glued flat against a flat strip 321, e.g. of glassfibre laminate, with a brittle glue. When the flat hose has been inserted compressed air is blown in so that the brittle glue snaps and the hose assumes a shape in which it abuts slot wall and cable.

Alternatively, as illustrated in Figure 21, glue is inserted into the hose which is then rolled flat so that it is glued in a state equivalent to that shown in Figure 19. When in place, compressed air is blown into the hose so that the glue joint is broken. The hose containing glue may alternatively be rolled to a different shape, e.g. to the shape shown in Figure 21.

The forcibly flattened shape of the support element upon insertion, as illustrated in Figures 19-22, means that in this embodiment it is also possible to insert it before the cable is wound, in which case the flat shape is retained until the cable lead-throughs are in place.

The embodiments shown in Figures 19-21 are based on the thickness of the tube being sufficient, once the forcible deformation has been released, for its inherent spring action to provide suitably resilient pressure against the cable lead-throughs.

In yet another alternative embodiment the walls of the hose can be made thinner than shown in Figure 19, in which case it is under vacuum during insertion and will expand when the hose is in place and the vacuum is released. In this embodiment the hose is subsequently filled with a pressure medium to give it sufficient contact pressure. This medium may be air or liquid, e.g. water. The function of the support element is thus reversible since this pressure can be relieved. Alternatively, the hose may be filled with a cold-hardening medium such as silicon rubber, in which case the pressure will be permanent.

In the latter embodiment the support element is placed asymmetrically in the slot. A symmetrical arrangement as illustrated in Figure 22, in which each support element 313 is placed mid-way between two cable lead-throughs, is also within the scope of the invention.

## Claims

1. A rotating electric machine comprising a stator with windings (6) drawn through slots (5) in the stator (1), **characterized in that** at least one winding (6) comprises an insulation system comprising at least two semiconducting layers (32, 34), each layer essentially constituting an equipotential surface, and also including solid insulation (33) between these layers (32, 34) and **in that** support members (13, 113, 212, 213) are arranged along and in contact with the winding (6).

2. A machine as claimed in claim 1, in which at least one of said layers (32, 34) has substantially the same coefficient of thermal expansion as the solid insulation (33).

3. A machine as claimed in claim 1 or claim 2, the stator winding of which comprises high-voltage cables (6) wherein each lead-through of the cable through a slot (5) is in the following designated a cable lead-through , members (13, 113) being arranged for resilient fixation of each cable lead-through in each slot (5), said members (13, 113) comprising means exerting pressure against each cable lead-through , said pressure means arranged between the cable lead-through and at least one side wall of the slot (5) and spring means arranged between the cable lead-through and at least on side wall of the slot, said pressure means comprising a plurality of elongate pressure elements running in the direction of the cable lead-through.

4. A machine as claimed in claim 3, arranged for direct connection to a power network without intermediate transformers.

5. A machine as claimed in claim 3 or claim 4, wherein each of said pressure elements is in the form of a tube comprising a sleeve containing pressure-hardened material.

6. A machine as claimed in claim 5, wherein said material is epoxy.

7. A machine as claimed in claim 3 or claim 4, wherein each of said pressure elements is in the form of a tube comprising a sleeve containing pressurized fluid.

8. A machine as claimed in any of claims 3-7, wherein at least the majority of said pressure elements exert pressure on two adjacent cable lead-throughs.

9. A machine as claimed in any of claims 3-7, wherein an axial section of said slot exhibits a profile with varying cross section in which each side surface of the slot immediately opposite each cable lead-through has a circular portion corresponding to the outer diameter of the cable and, between these circular portions. has waist parts where the slot width is less, said pressure elements being arranged in said waist parts.

10. A machine as claimed in claim 9, wherein at least some of said waist parts are single-sided waist parts defined by the fact that one slot wall comprises a tangential plane to said circular portions and the part of the other slot wall immediately opposite comprises a connecting plane situated between and substantially parallel to the corresponding tangential plane and a plane connecting the centres of the circular portions, said pressure element being arranged at the slot wall constituting a tangential plane.

11. A machine as claimed in any of claims 3-10, wherein all pressure elements in a slot are arranged at one and the same wall of the slot.

12. A machine as claimed in any of claims 3-11, wherein said pressure members and said resilient members are arranged close to the same slot wall, the resilient members being joined to the pressure members.

13. A machine as claimed in any of claims 3-12. wherein said pressure members and said resilient members are arranged close to different walls of the slot.

14. A machine as claimed in claim 13, wherein said resilient member consists of a sheet of elastic material.

15. A machine as claimed in claim 14, wherein said sheet is provided with slots.

16. A machine as claimed in claim 12, wherein said resilient members comprise pads of elastic material applied on the pressure member.

17. A machine as claimed in claim 16, wherein said pads are provided with slots.

18. A machine as claimed in claim 1 or claim 2. wherein the windings (6) consist of high-voltage cable (6), a corrugated sheath (212) surrounding at least some of the cable lead-throughs through the slots.

19. A machine as claimed in claim 18. wherein the corrugated sheath (212) surrounds the cable (6) continuously around its entire circumference and along its entire axial length in the slot (5).

20. A machine as claimed in claim 18 or claim 19, wherein the largest diameter of the corrugated sheath (212) is substantially equal to the width of the slot (5) and wherein the depth (d) of the corrugations is sufficient to absorb thermal expansion of the cable (6) during operation.

21. A machine as claimed in any of claims 18-20. wherein the corrugated sheath (212) is formed from a deformable preferably elastically deformable material.

22. A machine as claimed in any of claims 18-21. in which a casting compound (215) is arranged between the corrugated sheath (212) and the slot.

23. A machine as claimed in any of claims 18-22. wherein the corrugated sheath (212) is formed from a separate tubular corrugated sheath applied around the outer semiconductor layer (34) of the cable.

24. A machine as claimed in claim 23. wherein the corrugations (212) are annular.

25. A machine as claimed in any of claims 18-21, wherein the corrugated sheath surface is formed of corrugations (212a) in the outer semi -conducting layer (34a) of the cable (6).

26. A machine as claimed in claim 25, wherein the corrugations (212a) run in the longitudinal direction of the cable (6).

27. A machine as claimed in claim 1 or claim 2. wherein the windings consist of high-voltage cable (6) and wherein an elongated elastic support element (313) is arranged along and in contact with at least one cable lead-through (6) in at least one of the slots.

28. A machine as claimed in claim 27, wherein the support element (313) extends along the entire axial extension of the stator.

29. A machine as claimed in claim 27 or claim 28. wherein the support element (313) constitutes a hose.

30. A machine as claimed in claim 29. wherein the hose (313) encloses a pressure medium (312).

31. A machine as claimed in claim 30, wherein the pressure medium is a fluid.

32. A machine as claimed in claim 31, wherein the hose (313) is sealed at both ends.

33. A machine as claimed in claim 31, wherein the pressure fluid communicates with a pressure source.

34. A machine as claimed in claim 30, wherein the pressure medium (312) consists of an elastic material in solid form.

35. A machine as claimed in claim 34, wherein the elastic medium has a cavity running axially through it.

36. A machine as claimed in claim 35, wherein the cavity has non-circular cross- section.

37. A machine as claimed in any of claims 27-36, wherein each slot (5) in a radial plane has a profile with wide (7) and narrow (8) parts alternating in radial direction.

38. A rotating electric machine as claimed in claim 37, wherein the narrow parts (8) are asymmetrical in relation to a central plane running radially through the slot.

39. A rotating electric machine as claimed in claim 38, wherein each narrow part (8) is mirror-inverted in relation to the nearest adjacent narrow part (8) seen in the direction of said radial plane

40. A rotating electric machine as claimed in any of claims 27-39, wherein each support element (313) abuts two cable lead-throughs (6).

41. A rotating electric machine with magnetic circuit for high voltage in which the magnetic circuit comprises a magnetic core and a winding, **characterized in that** the winding (6) consists of a cable (6) comprising one or more current-carrying conductors (6), each conductor consisting of a number of strand parts (31), that around each conductor (6) is arranged an inner semiconducting layer (32), around which is arranged an insulating layer of solid insulation (33), around which is arranged an outer semiconducting layer (34) and **in that** support members (13, 113, 212, 313) are arranged along the windings (6), said support members being arranged along and in contact with the windings (6).

42. A machine as claimed in claim 41, including the features defined for machines as claimed in any of claims 2-40.

43. A method for manufacturing a rotay electric machine comprising a stator (1) with windings (6) drawn through slots (5) in the stator (1) **characterized in that** a cable is wound through the slots (5), which cable comprises an insulation system comprising at least two semiconducting layers (32, 34), each layer essentially constituting an equipotential surface and also including solid insulation (33) between the layers (32, 34) and **in that** at least one elongated support element (13, 113, 212, 213) is inserted and oriented axially in at least one of the slots (5).

44. A method as claimed in claim 43, wherein hose-like elements are inserted in the slots and oriented axially, after which the hose-like elements are filled with a pressure medium.

45. A method as claimed in claim 44, wherein the hose-like elements are filled with a curable material which is allowed to harden under pressure,

46. A method as claimed in claim 44, wherein hose-like elements are filled with epoxy.

47. A method as claimed in any of claims 44-46, wherein the hose-like elements are inserted after the cable windings have been applied.

48. A method as claimed in any of claims 44-47, wherein a single hose-like element is inserted so that it extends in several loops to and fro through the slots.

49. A method as claimed in claim 43, wherein the cable is surrounded by a corrugated sheath before it is inserted through the slot.

50. A method as claimed in claim 49, wherein the cable is surrounded by a corrugated sheath surface by applying a separate tubular corrugated sheath around the cable before it is inserted into the slot.

51. A method as claimed in claim 49, wherein the cable is surrounded by a corrugated sheath by applying a separate tubular corrugated sheath in the slot before the cable is inserted into the slot.

52. A method as claimed in claim 50, wherein the sheath is applied on the cable in axial direction and a lubricant is used during application.

53. , A method as claimed in any of claims 50-52, wherein a casting compound is inserted between the sheath and the walls of the slot.

54. A method as claimed in claim 53, wherein axial cooling tubes are cast in the casting compound.

55. A method as claimed in any of claims 50-54, wherein the sheath applied has annular corrugations.

56. A method as claimed in any of claims 50-54, wherein the sheath applied has corrugations running helically.

57. A method as claimed in claim 49, wherein the cable is surrounded by a corrugated sheath surface, the cable being manufactured such that the outer semi-conducting layer is provided with corrugations .

58. A method as claimed in claim 57, wherein the cable is manufactured such that its corrugations run in longitudinal direction.

59. A method as claimed in claim 57 or claim 58, wherein the outer semi-conducting layer of the cable is extruded.

60. A method as claimed in claim 43, wherein the support element is inserted in axial direction, after the cable has been wound.

61. A method as claimed in claim 60, wherein the support element is inserted into a space formed between at least one cable lead-through(word) and at least one wall of the slot and, during application the support element is caused to assume a state enabling it to pass without obstruction or resistance through the profile formed by said space in an axial cross- section, after which, when it has been inserted and positioned in said space, the support element is caused to expand transversely to the axial direction.

62. A method as claimed in claim 61, wherein the support element comprises a thin-walled elastic hose which is decompressed at insertion and the thinness and elasticity of which is sufficient for the hose to be deformed without noticeable resistance. thereby allowing passage through said profile of the space.

63. A method as claimed in claim 62, wherein at insertion the support element surrounds an elongated body along the entire length of the hose. said body having a cross-sectional dimension such that a space is formed between the hose and the body, said space being filled with a hardening elastic material when the support element is in place in the slot, so that the hose expands transversely to the axial direction.

64. A method as claimed in claim 63, wherein the elongated body consists of an inner. thin-walled hose which is filled with a pressure medium before said space is filled.

65. A method as claimed in claim 62, wherein the elongated body consists of a rod element, which rod element is removed when the space has been filled and said material has hardened.

66. A method as claimed in claim 65, wherein the rod element has a profile with longitudinal ridges.

67. A method as claimed in claim 61 wherein, prior to insertion, the support element is given a cross-sectional profile with clearance to the cross-sectional profile of said space, thereby allowing passage.

68. A method as claimed in claim 63, wherein at insertion the support element is subjected to axial tensile force to reduce its cross-sectional profile and thereby allow passage, the tensile force being released when the support element is in position, thus achieving said expansion.

69. A method as claimed in either of claims 60-61, wherein the support element consists of a hose which at insertion is caused to assume a forcibly deformed state and which, when the hose is in place, is released from the deformed state.

70. A method as claimed in claim 69, wherein the deformed state is achieved by gluing the hose in a deformed state and releasing the adhesive joint when the hose is in place.

71. A method as claimed in claim 69, wherein the deformed state is achieved by the interior of the hose being subjected to negative pressure and the negative pressure being released when the hose is in place.

72. A method as claimed in claim 61, wherein the support element consists of a hose having a cross-sectional profile that is less than the cross-sectional profile of said space and that when the element is in place the hose is filled with a pressure medium.

73. A method as claimed in claim 72, wherein the pressure medium is a cold-setting material.

74. A method as claimed in claim 72, wherein the pressure medium is a gas or a liquid and the hose is sealed at its ends when it has been filled with the pressure medium.

75. A method as claimed in claim 72, wherein the pressure medium is a gas or a liquid and wherein this is supplied so that communication can be maintained between the medium and the pressure source even after the machine is in operation.

76. A method as claimed in claim 72, wherein the pressure medium is a rod-shaped body which is inserted through the hose and expands it.

## Patentansprüche

1. Rotierende elektrische Maschine, die einen Stator mit Wicklungen (6) aufweist, die durch Wicklungsschlitze (5) im Stator (1) gezogen sind, **dadurch gekennzeichnet, dass** zumindest eine Wicklung (6) ein Isoliersystem aufweist, das mindestens zwei Halbleiterschichten (32, 34) aufweist, wobei jede Schicht im Wesentlichen eine Äquipotentialfläche bildet, sowie darüber hinaus eine Festisolation (33) zwischen diesen Schichten (32, 34) vorsieht, und dass Stützbauteile (13, 113, 212, 213) entlang und in Kontakt mit der Wicklung (6) angeordnet sind.

2. Maschine nach Anspruch 1, **dadurch gekennzeichnet, dass** zumindest eine der Schichten (32, 34) im Wesentlichen den selben Wärmeausdehnungskoeffizienten wie die Festisolation (33) aufweist.

3. Maschine nach Anspruch 1 oder 2, deren Statorwicklung Hochspannungskabel (6) aufweist, wobei jede Durchführung des Kabels durch einen Wicklungsschlitz (5) nachfolgend als Kabeldurchführung bezeichnet wird, wobei Bauteile (13, 113) zur nachgiebigen Fixierung einer jeden Kabeldurchführung in jedem wicklungsschlitz (5) angeordnet sind, wobei die Bauteile (13, 113) eine Vorrichtung aufweisen, die Druck auf jede Kabeldurchführung ausübt, wobei die Druckvorrichtung zwischen der Kabeldurchführung und mindestens einer Seitenwand des wicklungsschlitzes (5) angeordnet ist sowie eine Federvorrichtung zwischen der Kabeldurchführung und mindestens einer Seitenwand des Wicklungsschlitzes vorgesehen ist, wobei die Druckvorrichtung eine Vielzahl länglicher Druckelemente aufweist, die in Richtung der Kabeldurchführung verlaufen.

4. Maschine nach Anspruch 3, die zum direkten Anschluss an ein Hochspannungsnetz ohne zwischengeschaltete Transformatoren angeordnet ist.

5. Maschine nach Anspruch 3 oder 4, **dadurch gekennzeichnet, dass** jedes der Druckelemente in Form einer Röhre vorliegt, die einen Isolierschlauch aus druckgehärtetem Material aufweist.

6. Maschine nach Anspruch 5, **dadurch gekennzeichnet, dass** es sich bei dem Material um Epoxid handelt.

7. Maschine nach Anspruch 3 oder 4, **dadurch gekennzeichnet, dass** jedes der Druckelemente in Form einer Röhre vorliegt, das einen ein Druckfluid enthaltenden Isolierschlauch aufweist.

8. Maschine nach einem der Ansprüche 3 bis 7, **dadurch gekennzeichnet, dass** zumindest die Mehrzahl der Druckelemente Druck auf zwei benachbarte Kabeldurchführungen ausübt.

9. Maschine nach einem der Ansprüche 3 bis 7, **dadurch gekennzeichnet, dass** ein axialer Abschnitt des Wicklungsschlitzes ein Profil mit veränderlichem Querschnitt zeigt, in welchem jede Seitenfläche des Wicklungsschlitzes, welche der Kabeldurchführung unmittelbar gegenüberliegt, einen kreisförmigen Abschnitt aufweist, der dem Außendurchmesser des Kabels entspricht, sowie zwischen diesen kreisförmigen Abschnitten an den Stellen taillierte Abschnitte aufweist, an denen die Wicklungsschlitzbreite geringer ist, wobei die Druckelemente in diesen taillierten Abschnitten angeordnet sind.

10. Maschine nach Anspruch 9, **dadurch gekennzeichnet, dass** einige der taillierten Abschnitte einseitig taillierte Abschnitte sind, die durch die Tatsache definiert sind, dass eine Schlitzwand eine Tangentialebene zu den kreisförmigen Abschnitten aufweist, und dass der Teil der anderen Schlitzwand, der unmittelbar gegenüberliegt, eine Verbindungsebene aufweist, die zwischen und im Wesentlichen parallel zu der entsprechenden Tangentialebene und einer die Mittelpunkte der kreisförmigen Abschnitte verbindenden Ebene liegt, wobei das Druckelement an der Wand des Wicklungsschlitzes angeordnet ist, die eine Tangentialebene bildet.

11. Maschine nach einem der Ansprüche 3 bis 10, **dadurch gekennzeichnet, dass** alle Druckelemente in einem Wicklungsschlitz an ein und der selben Schlitzwand angeordnet sind.

12. Maschine nach einem der Ansprüche 3 bis 11, **dadurch gekennzeichnet, dass** die Druckelemente und die nachgiebigen Bauteile in engem Abstand zu der selben Wand angeordnet sind, wobei die nachgiebigen Bauteile mit den Druckbauteilen verbunden sind.

13. Maschine nach einem der Ansprüche 3 bis 12, **dadurch gekennzeichnet, dass** die Druckbauteile und die nachgiebigen Bauteile in engem Abstand zu unterschiedlichen Schlitzwänden angordnet sind.

14. Maschine nach Anspruch 13, **dadurch gekennzeichnet, dass** das nachgiebige Bauteil eine Lage aus einem elastischen Material aufweist.

15. Maschine nach Anspruch 14, **dadurch gekennzeichnet, dass** die Lage mit Wicklungsschlitzen versehen ist.

16. Maschine nach Anspruch 12, **dadurch gekennzeichnet, dass** die nachgiebigen Bauteile Anschlussflächen aus einem elastischen Material aufweisen, die auf dem Druckbauteil aufgebracht werden.

17. Maschine nach Anspruch 16, **dadurch gekennzeichnet, dass** die Anschlussflächen mit Schlitzen versehen sind.

18. Maschine nach Anspruch 1 oder 2, **dadurch gekennzeichnet, dass** die Wicklungen (6) aus einem Hochspannungskabel (6) und einem Wellmantel (212) bestehen, der zumindest einige der Kabeldurchführungen durch die Schlitze umgibt.

19. Maschine nach Anspruch 9, **dadurch gekennzeichnet, dass** der Wellmantel (212) das Kabel (6) kontinuierlich um dessen gesamten Umfang und entlang dessen gesamter axialer Länge in dem Schlitz (5) umgibt.

20. Maschine nach Anspruch 18 oder 19, **dadurch gekennzeichnet, dass** der größte Durchmesser des Wellmantels (212) im Wesentlichen identisch zu der Breite des Schlitzes (5) ist und dass die Tiefe (d) der Wellungen ausreicht, um die Wärmeausdehnung des Kabels (6) während des Betriebs aufzunehmen.

21. Maschine nach einem der Ansprüche 18 bis 20, **dadurch gekennzeichnet, dass** der wellmantel (212) aus einem verformbaren, vorzugsweise elastisch verformbaren Material gebildet ist.

22. Maschine nach einem der Ansprüche 18 bis 21, **dadurch gekennzeichnet, dass** eine Vergussmasse (215) zwischen dem Wellmantel (212) und dem Schlitz angeordnet ist.

23. Maschine nach einem der Ansprüche 18 bis 22, **dadurch gekennzeichnet, dass** der wellmantel (212) aus einem separaten rohrförmigen Wellmantel gebildet ist, der auf der äußeren Halbleiterschicht (34) des Kabels aufgebracht ist.

24. Maschine nach Anspruch 23, **dadurch gekennzeichnet, dass** die Wellungen (212) ringförmig sind.

25. Maschine nach einem der Ansprüche 18 bis 21, **dadurch gekennzeichnet, dass** die Wellmanteloberfläche aus Wellungen (212a) in der äußeren Halbleiterschicht (34a) des Kabels (6) gebildet wird.

26. Maschine nach Anspruch 25, **dadurch gekennzeichnet, dass** die Wellungen (212a) in Längsrichtung des Kabels (6) laufen.

27. Maschine nach Anspruch 1 oder 2, **dadurch gekennzeichnet, dass** die Wicklung aus einem Hochspannungskabel (6) aufgebaut ist und dass ein längliches elastisches Stützelement (313) entlang und in Kontakt mit mindestens einer Kabeldurchführung (6) in zumindest einem der Schlitze angeordnet ist.

28. Maschine nach Anspruch 27, **dadurch gekennzeichnet, dass** sich das Stützelement (313) entlang der gesamten axialen Ausdehnung des Stators erstreckt.

29. Maschine nach Anspruch 27 oder 28, **dadurch gekennzeichnet, dass** das Stützelement (313) einen Schlauch bildet.

30. Maschine nach Anspruch 29, **dadurch gekennzeichnet, dass** der Schlauch (313) ein Druckmedium (312) einschließt.

31. Maschine nach Anspruch 30, **dadurch gekennzeichnet, dass** das Druckmedium ein Fluid ist.

32. Maschine nach Anspruch 31, **dadurch gekennzeichnet, dass** der Schlauch (313) an beiden Enden abgedichtet ist.

33. Maschine nach Anspruch 31, **dadurch gekennzeichnet, dass** das Druckfluid mit einer Druckquelle kommuniziert.

34. Maschine nach Anspruch 30, **dadurch gekennzeichnet, dass** das Druckmedium (312) aus einem elastischen Material in fester Form besteht.

35. Maschine nach Anspruch 34, **dadurch gekennzeichnet, dass** das elastische Medium einen Hohlraum aufweist, der sich axial durch dieses erstreckt.

36. Maschine nach Anspruch 35, **dadurch gekennzeichnet, dass** der Hohlraum einen nicht-kreisförmigen Querschnitt aufweist.

37. Maschine nach einem der Ansprüche 27 bis 36, **dadurch gekennzeichnet, dass** jeder Schlitz (5) in einer radialen Ebene ein Profil mit breiten (7) und schmalen (8) Abschnitten aufweist, die sich in radialer Richtung abwechseln.

38. Maschine nach Anspruch 37, **dadurch gekennzeichnet, dass** die schmalen Abschnitte (8) in Relation zu einer radial durch den Schlitz verlaufenden zentralen Ebene asymmetrisch sind.

39. Maschine nach Anspruch 38, **dadurch gekennzeichnet, dass** jeder schmale Abschnitt (8) in Relation zu dem nächstgelegenen benachbarten schmalen Abschnitt (8) von der Richtung der radialen Ebene aus gesehen spiegelverkehrt ist.

40. Rotierende elektrische Maschine nach einem der Ansprüche 27 bis 39, **dadurch gekennzeichnet, dass** jedes Stützelement (313) zwei Kabeldurchführungen (6) stützt.

41. Rotierende elektrische Maschine mit einem Magnetschaltkreis für Hochspannung, wobei der Magnetschaltkreis einen Magnetkern und eine Wicklung aufweist, **dadurch gekennzeichnet, dass** die Wicklung (6) aus einem Kabel (6), das einen oder mehrere stromführende Leiter (6) aufweist, besteht, wobei jeder Leiter aus einer Anzahl von Litzenteilen (31) besteht, dass um jeden Leiter (6) herum eine innere Halbleiterschicht (32) angeordnet ist, die von einer Isolierschicht aus Festisolation (33) umgeben ist, wobei um die Festisolation herum wiederum eine äußere Halbleiterschicht (34) angeordnet ist, und dass Stützbauteile (13, 113, 212, 313) entlang der Wicklungen (6) angeordnet sind, wobei die Stützbauteile entlang und in Kontakt mit den Wicklungen (6) angeordnet sind.

42. Maschine nach Anspruch 41, welche die Merkmale der Maschinen gemäß einem der Ansprüche 2 bis 40 einschließen.

43. Verfahren zur Herstellung einer rotierenden elektrischen Maschine, welche einen Stator (1) mit Wicklungen (6) aufweist, die durch Schlitze (5) im Stator gezogen sind, **dadurch gekennzeichnet, dass** ein Kabel durch die Schlitze (5) gewickelt wird, wobei das Kabel ein Isoliersystem aufweist, das mindestens zwei Halbleiterschichten (32, 34) umfasst, wobei jede Schicht im wesentlichen eine Äquipotentialfläche bildet, sowie darüber hinaus eine Festisolation (33) zwischen diesen Schichten (32, 34) vorsieht, und dass zumindest ein längliches Stützelement (13, 113, 212, 213) eingeführt und zumindest in einem der Schlitze axial ausgerichtet ist.

44. Verfahren nach Anspruch 43, **dadurch gekennzeichnet, dass** schlauchähnliche Elemente in die Schlitze eingeführt und axial ausgerichtet werden, woraufhin die schlauchähnlichen Elemente mit einem Druckmedium gefüllt werden.

45. Verfahren nach Anspruch 44, **dadurch gekennzeichnet, dass** die schlauchähnlichen Elemente mit einem aushärtbaren Material gefüllt werden, das unter Druck aushärten kann.

46. Verfahren nach Anspruch 44, **dadurch gekennzeichnet, dass** die schlauchähnlichen Elemente mit Epoxid gefüllt werden.

47. Verfahren nach einem der Ansprüche 44 bis 46, **dadurch gekennzeichnet, dass** die schlauchähnlichen Elemente eingeführt werden, nachdem die Kabelwicklungen angebracht worden sind.

48. Verfahren nach einem der Ansprüche 44 bis 47, **dadurch gekennzeichnet, dass** ein einzelnes schlauchähnliches Element eingeführt wird, so dass sich dieses in mehreren Schleifen durch die Schlitze hin- und her bzw. auf und ab erstreckt.

49. Verfahren nach Anspruch 43, **dadurch gekennzeichnet, dass** das Kabel von einem Wellmantel umgeben wird, bevor es durch den Schlitz eingeführt wird.

50. Verfahren nach Anspruch 49, **dadurch gekennzeichnet, dass** das Kabel von einer Wellmantelfläche umgeben wird, indem ein separater rohrförmiger Wellmantel um das Kabel herum angebracht wird, bevor es in den Schlitz eingeführt wird.

51. Verfahren nach Anspruch 49, **dadurch gekennzeichnet, dass** das Kabel von einer Wellmantelfläche umgeben wird, indem ein separater rohrförmiger Wellmantel in dem Schlitz angebracht wird, bevor das Kabel in den Schlitz eingeführt wird.

52. Verfahren nach Anspruch 50, **dadurch gekennzeichnet, dass** der Mantel auf dem Kabel in axialer Richtung aufgebracht wird und ein Schmierstoff während der Aufbringung verwendet wird.

53. Verfahren nach einem der Ansprüche 50 bis 52, **dadurch gekennzeichnet, dass** eine Vergussmasse zwischen dem Mantel und den Wänden des Schlitzes eingefügt wird.

54. Verfahren nach Anspruch 53, **dadurch gekennzeichnet, dass** axiale Kühlrohre in der Vergussmasse vergossen werden.

55. Verfahren nach einem der Ansprüche 50 bis 54, **dadurch gekennzeichnet, dass** der aufgebrachte Mantel ringförmige Wellen aufweist.

56. Verfahren nach einem der Ansprüche 50 bis 54, **dadurch gekennzeichnet, dass** der aufgebrachte Mantel spiralförmig verlaufende Wellen aufweist.

57. Verfahren nach Anspruch 49, **dadurch gekennzeichnet, dass** das Kabel von einer Wellmantelfläche umgeben wird, wobei das Kabel derart hergestellt wird, dass die äußere Halbleiterschicht mit Wellen versehen ist.

58. Verfahren nach Anspruch 57, **dadurch gekennzeichnet, dass** das Kabel derart hergestellt ist, dass seine Wellen in Längsrichtung verlaufen.

59. Verfahren nach Anspruch 57 oder Anspruch 58, **dadurch gekennzeichnet, dass** die äußere Halbleiterschicht des Kabels extrudiert wird.

60. Verfahren nach Anspruch 43, **dadurch gekennzeichnet, dass** das Stützelement in axialer Richtung eingeführt wird, nachdem das Kabel gewickelt worden ist.

61. Verfahren nach Anspruch 60, **dadurch gekennzeichnet, dass** das Stützelement in einen Zwischenraum eingeführt wird, der zwischen mindestens einer Kabeldurchführung und mindestens einer Schlitzwand gebildet ist, dass das Stützelement während der Einführung dazu gebracht wird, einen Zustand anzunehmen, der es ihm ermöglicht, ohne ein Hindernis oder einen Widerstand durch das von dem Zwischenraum im axialen Querschnitt gebildeten Profil zu gelangen, wobei das Stützelement nach seiner Einführung und Anordnung in dem Zwischenraum dazu gebracht wird, sich quer zur axialen Richtung auszudehnen.

62. Verfahren nach Anspruch 61, **dadurch gekennzeichnet, dass** das Stützelement einen dünnwandigen elastischen Schlauch aufweist, der beim Einführen dekomprimiert oder entspannt ist, und dessen Dünne und Elastizität ausreichen, um den Schlauch ohne merklichen Widerstand zu verformen, somit zulassen, dass der Schlauch durch das Profil des Zwischenraums hindurch gelangt.

63. Verfahren nach Anspruch 62, **dadurch gekennzeichnet, dass** beim Einführen das Stützelement einen länglichen Körper entlang der gesamten Länge des Schlauchs umgibt, wobei der Körper eine Querschnittsabmessung aufweist, so dass ein Zwischenraum zwischen dem Schlauch und dem Körper gebildet wird, wobei der Zwischenraum mit einem aushärtenden elastischen Material gefüllt wird, wenn das Stützelement in dem Schlitz in Position ist, so dass sich der Schlauch quer zur axialen Richtung ausdehnt.

64. Verfahren nach Anspruch 63, **dadurch gekennzeichnet, dass** der längliche Körper aus einem inneren dünnwandigen Schlauch aufgebaut ist, der mit einem Druckmedium gefüllt wird, bevor der Zwischenraum gefüllt wird.

65. Verfahren nach Anspruch 62, **dadurch gekennzeichnet, dass** der längliche Körper aus einem Stabelement aufgebaut ist, wobei das Stabelement entfernt wird, wenn der Zwischenraum gefüllt worden ist und der Werkstoff ausgehärtet hat.

66. Verfahren nach Anspruch 65, **dadurch gekennzeichnet, dass** das Stabelement ein Profil mit Längsrippen aufweist.

67. Verfahren nach Anspruch 61, **dadurch gekennzeichnet, dass** das Stützelement vor dem Einführen ein Querschnittsprofil mit einem Freiraum zu dem Querschnittsprofil des Zwischenraums erhält, wodurch ein Passieren des Stützelements ermöglicht wird.

68. Verfahren nach Anspruch 63, **dadurch gekennzeichnet, dass** das Stützelement beim Einführen einer axialen Zugkraft ausgesetzt wird, um dessen Querschnittsprofil zu verringern und somit ein Passieren zu ermöglichen, wobei die Zugkraft eingestellt wird, wenn sich das Stützelement in Position befindet, wodurch eine Ausdehnung erzielt wird.

69. Verfahren nach Anspruch 60 oder 61, **dadurch gekennzeichnet, dass** das Stützelement aus einem Schlauch besteht, der beim Einführen dazu gebracht wird, einen wirksam verformten Zustand anzunehmen, und welcher aus dem verformten Zustand freigegeben wird, wenn der Schlauch in Position ist.

70. Verfahren nach Anspruch 69, **dadurch gekennzeichnet, dass** der verformte Zustand dadurch erreicht wird, dass der Schlauch in einem verformten Zustand festgeklebt wird, und die Klebestelle gelöst wird, wenn der Schlauch in Position ist.

71. Verfahren nach Anspruch 69, **dadurch gekennzeichnet, dass** der verformte Zustand dadurch erreicht wird, dass das Innere des Schlauchs einem Unterdruck ausgesetzt wird, und der Unterdruck eingestellt wird, wenn der Schlauch in Position ist.

72. Verfahren nach Anspruch 61, **dadurch gekennzeichnet, dass** das Stützelement aus einem Schlauch besteht, der ein Querschnittsprofil aufweist, das kleiner als das Querschnittprofil des Zwischenraums ist, und dass der Schlauch mit einem Druckmedium gefüllt wird, wenn er in Position ist.

73. Verfahren nach Anspruch 72, **dadurch gekennzeichnet, dass** das Druckmedium ein kalt abbindendes Material ist.

74. Verfahren nach Anspruch 72, **dadurch gekennzeichnet, dass** das Druckmedium ein Gas oder eine Flüssigkeit ist, und dass der Schlauch an seinen Enden abgedichtet wird, wenn er mit dem Druckmedium gefüllt worden ist.

75. Verfahren nach Anspruch 72, **dadurch gekennzeichnet, dass** das Druckmedium ein Gas oder eine Flüssigkeit ist, und dass beide so zugeführt werden, dass eine Verbindung zwischen dem Medium und der Druckquelle auch nach dem Betrieb der elektrischen Maschine aufrechterhalten werden kann.

76. Verfahren nach Anspruch 72, **dadurch gekennzeichnet, dass** es sich bei dem Druckmedium um einen stabförmigen Körper handelt, der durch den Schlauch eingeführt wird und diesen dehnt.

## Revendications

1. Machine électrique rotative comprenant un stator avec des enroulements (6) passant par des fentes (5) dans le stator (1), **caractérisée en ce qu'**au moins un enroulement (6) comprend un système d'isolement comprenant au moins deux couches semi-conductrices (32, 34), chaque couche constituant sensiblement une surface équipotentielle, et comprenant également un isolement solide (33) entre ces couches (32, 34) et **en ce que** des éléments de support (13, 113, 212, 213) sont disposés le long de, et en contact avec, l'enroulement (6).

2. Machine selon la revendication 1, dans laquelle au moins une desdites couches (32, 34) a pratiquement le même coefficient de dilatation thermique que l'isolement solide (33).

3. Machine selon la revendication 1 ou 2, dans laquelle les enroulements du stator comprennent des câbles à haute tension (6), dans lequel chaque traversée de câble à travers une encoche (5) sera désignée par la suite comme élément de traversée de câble (13, 113), étant disposé afin de fixer de façon résiliente chaque traversée de câble à travers la fente (5), lesdits éléments (13, 113) comprenant un moyen exerçant une pression contre chaque traversée de câble, ledit moyen de pression étant disposé entre la traversée de câble et au moins une paroi latérale de la fente (5) et un moyen à ressort étant disposé entre la traversée de câble et au moins une paroi latérale de la fente, ledit moyen de pression comprenant une pluralité d'éléments de pression allongés s'étendant dans la direction de la traversée de câble.

4. Machine selon la revendication 3, configurée pour une connexion directe au réseau d'alimentation sans transformateurs intermédiaires.

5. Machine selon la revendication 3 ou 4 dans laquelle chacun desdits éléments de pression a la forme d'un tube comprenant un manchon contenant un matériau durci par pression.

6. Machine selon la revendication 5, dans laquelle ledit matériau est de l'époxy.

7. Machine selon la revendication 3 ou 4 dans laquelle chacun desdits éléments de pression a la forme d'un tube comprenant un manchon contenant un fluide pressurisé.

8. Machine selon l'une quelconque des revendications 3-7, dans laquelle au moins la majorité desdits éléments de pression exercent une pression sur deux traversées de câbles adjacentes.

9. Machine selon l'une quelconque des revendications 3-7, dans laquelle une section axiale de ladite fente présente un profil avec une section transversale variable dans laquelle chaque surface latérale du logement immédiatement opposé à chaque traversée de câble a une partie circulaire correspondant au diamètre externe du câble et, entre ces parties circulaires, a des parties resserrées dans lesquelles la largeur du logement est moindre, lesdits éléments de pression étant disposés dans lesdites parties resserrées.

10. Machine selon la revendication 9, dans laquelle au moins certaines des parties resserrées sont des parties resserrées à un seul côté définies par le fait qu'une paroi de la fente comprend un plan tangentiel aux dites parties circulaires et que la partie de l'autre paroi de la fente immédiatement opposée comprend un plan de connexion situé entre, et pratiquement parallèle à, le plan tangentiel correspondant et le plan reliant les centres des parties circulaires, ledit élément de pression étant disposé sur la paroi de la fente constituant un plan tangentiel.

11. Machine selon l'une quelconque des revendications 3 à 10, dans laquelle tous les éléments de pression dans une fente sont disposés sur une, et la même, paroi de cette fente.

12. Machine selon l'une quelconque des revendications 3-11, dans laquelle lesdits éléments de pression et lesdits éléments résilients sont disposés à proximité de la même paroi de fente, les éléments résilients étant réunis aux éléments de pression.

13. Machine selon l'une quelconque des revendications 3 à 12, dans laquelle lesdits éléments de pression et lesdits éléments résilients sont disposés à proximité de différentes parois de la fente.

14. Machine selon la revendication 13, dans laquelle ledit élément résilient est une feuille de matériau élastique.

15. Machine selon la revendication 14, dans laquelle ladite feuille comporte des fentes.

16. Machine selon la revendication 12, dans laquelle lesdits éléments résilients comprennent des tampons de matériau élastique appliqués sur l'élément de pression.

17. Machine selon la revendication 16, dans laquelle lesdits tampons comportent des fentes.

18. Machine selon la revendication 1 ou la revendication 2, dans laquelle les enroulements (6) comprennent un câble à haute tension (6), une gaine cannelée (212) entourant au moins certaines des traversées de câbles à travers les fentes.

19. Machine selon la revendication 18, dans laquelle la gaine cannelée (212) entoure le câble (6) de façon continue autour de sa circonférence totale et le long de sa longueur axiale totale dans la fente (5).

20. Machine selon la revendication 18 ou 19, dans laquelle le plus grand diamètre de la gaine cannelée (212) est pratiquement égal à la largeur de la fente (5) et dans laquelle la profondeur (d) des cannelures est suffisante pour absorber la dilatation thermique du câble (6) en cours de fonctionnement.

21. Machine selon l'une quelconque des revendications 18-20, dans laquelle la gaine cannelée (212) est formée à partir d'un matériau de préférence élastiquement déformable.

22. Machine selon l'une quelconque des revendications 18 à 21, dans laquelle une résine de moulage (215) est disposée entre la gaine cannelée (212) et la fente.

23. Machine selon l'une quelconque des revendications 18-22, dans laquelle la gaine cannelée (212) est formée à partir d'une gaine cannelée tubulaire séparée appliquée autour de la couche semi-conductrice externe (34) du câble.

24. Machine selon la revendication 23, dans laquelle les cannelures (212) sont annulaires.

25. Machine selon l'une quelconque des revendications 18-21, dans laquelle la surface de la gaine cannelée (212) est formée de cannelures (212a) dans la couche semi-conductrice externe (34a) du câble (6).

26. Machine selon la revendication 25, dans laquelle les cannelures (212a) s'étendent dans la direction longitudinale du câble (6).

27. Machine selon la revendication 1 ou la revendication 2, dans laquelle les enroulements comprennent un câble à haute tension (6), et dans laquelle un élément de support élastique allongé (313) est disposé le long de, et en contact avec au moins une traversée de câble (6) dans au moins l'une des fentes.

28. Machine selon la revendication 27, dans laquelle l'élément de support (313) s'étend dans tout le prolongement axial du stator.

29. Machine selon la revendication 27 ou la revendication 28, dans laquelle l'élément de support (313) est un tuyau.

30. Machine selon la revendication 29, dans laquelle le tuyau (313) contient un milieu de pression (312).

31. Machine selon la revendication 30, dans laquelle le milieu de pression est un fluide.

32. Machine selon la revendication 31, dans laquelle le tuyau (313) est fermé à ses deux extrémités.

33. Machine selon la revendication 31, dans laquelle le fluide de pression communique avec une source de pression.

34. Machine selon la revendication 30, dans laquelle le milieu de pression (312) comprend un matériau élastique sous forme solide.

35. Machine selon la revendication 34, dans laquelle le milieu élastique a une cavité le traversant dans le sens axial.

36. Machine selon la revendication 35, dans laquelle la cavité a une section transversale non circulaire.

37. Machine selon l'une quelconque des revendications 27-36, dans laquelle chaque fente (5) dans un plan radial a un profil avec des parties large (7) et étroite (8) alternant dans le sens radial.

38. Machine électrique rotative selon la revendication 37, dans laquelle les parties étroites (8) sont asymétriques par rapport à un plan central traversant la fente dans le sens radial.

39. Machine électrique rotative selon la revendication 38, dans laquelle chaque partie étroite (8) est inversée en miroir par rapport à la plus proche partie étroite adjacente (8) vue dans le sens dudit plan radial.

40. Machine électrique rotative selon l'une quelconque des revendications 27-39, dans laquelle chaque élément de support (313) aboute à deux traversées de câbles (6).

41. Machine électrique rotative avec un circuit magnétique à haute tension dans laquelle le circuit magnétique comprend un noyau magnétique et un enroulement **caractérisé en ce que** l'enroulement (6) comprend un câble (6) comprenant un ou plusieurs conducteurs acheminant du courant (6), chaque conducteur comprenant plusieurs parties à torons (31) qui, autour de chaque conducteur (6) sont disposées sur une couche semi-conductrice interne (32), autour de laquelle est disposée une couche isolante solide (33), autour de laquelle est disposée une couche semi-conductrice externe (34), et **en ce que** les éléments de support (13, 313, 212, 313) sont disposés le long des enroulements (6), lesdits éléments de support étant disposés le long de, et en contact avec, les enroulements (6).

42. Machine selon la revendication 41, comprenant les caractéristiques définies pour les machines selon l'une quelconque des revendications 2 à 40.

43. Procédé de fabrication d'une machine électrique rotative comprenant un stator (1) avec des enroulements (6) passant à travers des fentes (5) du stator (1), **caractérisé en ce qu'**un câble est enroulé à travers les fentes (5), lequel câble comprend un système d'isolement comprenant au moins deux couches semi-conductrices (32, 34), chaque couche comprenant essentiellement une surface équipotentielle et comprenant également un isolant solide (33) entre les couches (32, 34), et **en ce qu'**au moins un élément de support allongé (13, 113, 212, 213) est inséré et orienté dans le sens axial dans au moins l'une des fentes (5).

44. Procédé selon la revendication 43, dans lequel des éléments de type tuyaux sont insérés dans les fentes et orientés dans le sens axial, après quoi ces éléments de type tuyaux sont remplis d'un milieu de pression.

45. Procédé selon la revendication 44, dans lequel les éléments de type tuyaux sont remplis d'un matériau qui peut durcir sous pression.

46. Procédé selon la revendication 44, dans laquelle lesdits éléments de type tuyau sont remplis d'époxy.

47. Procédé selon l'une quelconque des revendications 44 à 46, dans lequel les éléments de type tuyau sont insérés après que l'enroulement du câble a été appliqué.

48. Procédé selon l'une quelconque des revendications 44 à 47, dans lequel un seul élément de type tuyau est inséré de façon à s'étendre en formant plusieurs boucles dans les deux sens à travers les fentes.

49. Procédé selon la revendication 43, dans lequel le câble est entouré d'une gaine cannelée avant d'être inséré à travers la fente.

50. Procédé selon la revendication 49, dans lequel le câble est entouré d'une surface de gaine cannelée en appliquant une gaine cannelée tubulaire séparée autour du câble avant qu'il ne soit inséré dans la fente.

51. Procédé selon la revendication 49, dans lequel le câble est entouré d'une gaine cannelée en appliquant une gaine cannelée tubulaire séparée dans la fente avant que le câble ne soit inséré dans la fente.

52. Procédé selon la revendication 50, dans lequel la gaine est appliquée sur le câble dans le sens axial et un lubrifiant est utilisé durant l'application.

53. Procédé selon l'une quelconque des revendications 50 à 52, dans laquelle un composé de moulage est insérée entre la gaine et les parois de la fente.

54. Procédé selon la revendication 53, dans laquelle les tubes de refroidissement axiaux sont moulés dans le composé de moulage.

55. Procédé selon l'une quelconque des revendications 50 à 54, dans lequel la gaine appliquée a des cannelures tubulaires.

56. Procédé selon l'une quelconque des revendications 50 à 54, dans lequel la gaine appliquée a des cannelures en spirales.

57. Procédé selon la revendication 49, dans lequel le câble est entouré d'une surface de gaine cannelée, ce câble étant fabriqué de telle sorte que la couche semi-conductrice externe comporte des cannelures.

58. Procédé selon la revendication 57, dans lequel le câble est fabriqué de telle sorte que ses cannelures s'étendent dans la direction longitudinale.

59. Procédé selon la revendication 57 ou la revendication 58, dans lequel la couche semi-conductrice externe du câble est extrudée.

60. Procédé selon la revendication 43, dans lequel l'élément de support est inséré dans le sens axial, après que le câble a été enroulé.

61. Procédé selon la revendication 60, dans lequel l'élément de support est inséré dans un espace formé entre au moins une traversée de câble (enroulé) et au moins une paroi de la fente et, en cours d'application, l'élément de support est amené à prendre un état lui permettant de passer sans obstruction ni résistance à travers le profil formé par ledit espace dans une section transversale axiale après quoi, une fois inséré et positionné dans ledit espace, l'élément de support est amené à se dilater transversalement dans le sens axial.

62. Procédé selon la revendication 61, dans lequel l'élément de support comprend un tuyau à paroi mince et élastique qui est décomprimé à l'insertion et dont la finesse et l'élasticité sont suffisantes pour permettre la déformation de ce tuyau sans résistance notable, en permettant ainsi le passage à travers ledit profil de l'espace.

63. Procédé selon la revendication 62 dans lequel, à l'insertion, l'élément de support entoure un corps allongé le long de la longueur totale du tuyau, ledit corps ayant une dimension en coupe telle qu'un espace est formé entre le tuyau et ce corps, ledit espace étant rempli d'un matériau élastique durcissant lorsque l'élément de support est en place dans la fente, de telle sorte que le tuyau se dilate transversalement dans le sens axial.

64. Procédé selon la revendication 63, dans lequel le corps allongé comprend un tuyau interne à paroi mince qui est rempli d'un moyen de pression avant que ledit espace ne soit rempli.

65. Procédé selon la revendication 62, dans lequel le corps allongé comprend un élément tige, lequel élément tige est retiré après que l'espace a été rempli et que ledit matériau a durci.

66. Procédé selon la revendication 65, dans lequel le dit élément tige a un profil avec des cannelures longitudinales.

67. Procédé selon la revendication 61 dans lequel, avant insertion, l'élément de support prend un profil en coupe avec un espacement pour le profil en coupe dudit espace, en créant ainsi un passage.

68. Procédé selon la revendication 63 dans lequel, à l'insertion, l'élément de support à soumis à une force de tension axiale pour réduire son profil en coupe et créer ainsi un passage, cet effort de traction étant supprimé lorsque l'élément de support est en place, en réalisant ainsi la dite dilatation.

69. Procédé selon l'une des revendications 60 ou 61, dans lequel l'élément de support comprend un tuyau qui, à l'insertion; est amené de force à prendre un état déformé et qui, quand le tuyau est en place, quitte cet état déformé.

70. Procédé selon la revendication 69, dans lequel l'état déformé est obtenu en collant le tuyau dans un état déformé et en ôtant le joint adhésif lorsque le tuyau est en place.

71. Procédé selon la revendication 69, dans lequel l'état déformé est obtenu en soumettant l'intérieur du tuyau à une pression négative, cette pression négative étant supprimée lorsque le tuyau est en place.

72. Procédé selon la revendication 61, dans lequel l'élément de support comprend un tuyau qui a un profil en coupe inférieur au profil en coupe dudit espace et, lorsque cet élément est en place, est rempli d'un milieu de pression.

73. Procédé selon la revendication 72, dans lequel le milieu de pression est un matériau durcissable à froid.

74. Procédé selon la revendication 72, dans lequel le milieu de pression est un gaz ou un liquide et le tuyau est fermé à ses deux extrémités lorsqu'il est rempli du milieu de pression.

75. Procédé selon la revendication 72, dans lequel le milieu de pression est un gaz ou un liquide et dans lequel celui-ci est acheminé de façon à ce que la communication puisse être maintenue entre ce milieu et la source de pression, même lorsque la machine fonctionne.

76. Procédé selon la revendication 72, dans lequel le milieu de pression est un corps en forme de tige qui est inséré à travers le tuyau et le dilate.
